# EUROPÄISCHE PATENTSCHRIFT

(11) **EP 1 386 653 B1**
(45) Veröffentlichungstag und Bekanntmachung des Hinweises auf die Patenterteilung: **30.05.2007**
(21) Anmeldenummer: 03015328.2
(22) Anmeldetag: 07.07.2003
(51) Int. Cl.: B01D 53/26, B01D 29/11, B01D 5/00, F25B 39/04, F28F 9/02

(54) **Wärmetauscher für einen Kältemittelkreislauf einer Klimaanlage mit Filter und Kältemitteltrockner**
Heat exchanger for a refrigerant cycle system of an air conditioner with filter and refrigerant dryer
Echangeur de chaleur pour un cycle de frigorigène avec filtre et dessicateur réfrigérant

(30) Priorität: 31.07.2002 DE 10234890
(43) Veröffentlichungstag der Anmeldung: 04.02.2004
(73) Patentinhaber: Behr GmbH & Co. KG, 70469 Stuttgart (DE)
(72) Erfinder: Förster, Uwe, Dipl.-Ing., 71634 Ludwigsburg (DE); Molt, Kurt, Dipl.-Ing., 74321 Bietigheim-Bissingen (DE); Kämmler, Georg, Dr.-Ing., 70439 Stuttgart (DE)
(74) Vertreter: Grauel, Andreas

(56) Entgegenhaltungen:
- EP-A- 0 287 917
- EP-A- 0 854 058
- EP-A- 1 132 695
- EP-A- 1 147 930
- EP-A- 1 219 335
- DE-A- 19 848 744
- US-A- 3 971 373
- US-A- 5 486 410
- US-A- 5 992 174
- US-A- 6 013 119
- US-B1- 6 190 627
- US-B1- 6 331 351
- PATENT ABSTRACTS OF JAPAN vol. 1997, no. 06, 30. Juni 1997 (1997-06-30) & JP 09 053867 A (CALSONIC CORP;NISSAN MOTOR CO LTD), 25. Februar 1997 (1997-02-25)

## Beschreibung

Die Erfindung betrifft eine Filteranlage zum Reinigen eines Mediums mit einem Filter sowie einen Wärmetauscher und einen Kältemittelkreislauf mit einer solchen Filteranlage.

Flüssige oder gasförmige Medien werden normalerweise gereinigt, indem sie durch Filteranlagen geleitet werden. Es besteht die Möglichkeit, ein Medium physikalisch zu filtern, indem unerwünschte Partikel mit Hilfe eines makroskopischen Siebes innerhalb einer Filteranlage aus dem Medium herausgefiltert werden. Andererseits kann ein Medium auch chemisch gefiltert oder gereinigt werden, indem Stoffe, die dem Medium beigemischt oder in dem Medium gelöst sind, beispielsweise durch Adsorption dem Medium entzogen werden.

Ein Beispiel für eine Filteranlage ist ein sogenannter Trockner in einem Kältemittelkreislauf einer Kraftfahrzeugklimaanlage. Das Kältemittel, üblicherweise R134a, nimmt gegebenenfalls im Laufe einer Betriebszeit, zum Beispiel infolge Undichtigkeiten im Kreislauf, Feuchtigkeit (Wasser, H₂O) auf. Dieses Wasser ist unerwünscht und das Kältemittel wird daher durch den Trockner geleitet.

Durch die DE 42 38 853 C2 der Anmelderin wurde ein sogenanntes Kondensatormodul bekannt, bei welchem ein Sammler in einen Kondensator einer Klimanlage integriert ist, wobei sich in dem Sammler eine Trocknerpatrone oder ein so genanntes Trocknersäckchen befindet. Die Trocknerpatrone besteht aus einem perforierten Kunststoffbehälter, der mit Trocknergranulat als chemischem Filter gefüllt ist. Das Trocknersäckchen besteht aus einem für das Kältemittel durchlässigen Gewebe oder Vlies und ist ebenfalls mit Trocknergranulat gefüllt.

Eine ähnliche Trocknerpatrone wurde durch die DE 197 12 714 A1 der Anmelderin bekannt. Sie besteht aus einem käfigartigen Kunststoffbehälter, der mit einem Sieb als physikalischem Filter ausgekleidet ist und als chemischen Filter Trocknergranulat in Form einer Schüttung in sich aufnimmt. Damit das Granulat während des Betriebes im Fahrzeug nicht zu starkem Abrieb unterworfen ist, wird die Granulatfüllung durch eine federbelastete Scheibe, die innerhalb des Kunststoffbehälters beweglich ist, zusammengedrückt.

Diese bekannten Trocknerausführungen für Kältemittelkreisläufe als Beispiele für Filteranlagen sind hinsichtlich ihrer Herstellung mit einem gewissen Fertigungs- und Kostenaufwand verbunden.

Die EP 0 854 058 A1 beschreibt sowohl einen Wärmetauscher als auch einen Kältemittelkreislauf und befasst sich mit der Aufgabe, hierfür eine Trocknerpatrone mit kostengünstiger Herstellbarkeit und einfacher Handhabung bereitzustellen. Es wird vorgeschlagen, dass eine hygroskopische Füllung zur Trocknung des Kältemittels in einem Patronengehäuse aufgenommen ist, dessen Öffnungen durch Filtermaterialien mit unterschiedlichen Porengröße abgedeckt sind. Diese als Siebe ausgebildeten Filtermaterialien haben die Funktion physikalischer Filter, so dass das Kältemittel zunächst durch einen physikalischen Filter, anschließend durch einen Kältemitteltrockner und abschließend wiederum durch einen physikalischen Filter strömt. Nachteilig hieran ist, dass der als Granulat vorliegende Kältemitteltrockner während der Herstellung nach wie vor in die Trocknerpatrone eingefüllt werden muss, wenn auch unter Einsparung eines zusätzlichen Säckchens.

Es ist Aufgabe der vorliegenden Erfindung, einen Wärmetauscher und/oder einen Kältemittelkreislauf bereitzustellen, bei dem ein vereinfachter und/oder kostengünstiger Aufbau und gegebenenfalls eine verbesserte Funktion realisierbar ist.

Diese Aufgabe wird durch einen Wärmetauscher mit den Merkmalen des Anspruchs 1 sowie durch einen Kältemittelkreislauf mit den Merkmalen des Anspruchs 16 gelöst.

Gemäß Anspruch 1und 16 umfaßt eine Filteranlage ein Gehäuse mit einer Kammer und zumindest einer Eintritts- und zumindest einer Austrittsöffnung für das Kältemittel. In der Kammer befindet sich ein Filter, welcher die Kammer in eine Rücklaufkammer und eine Vorlaufkammer teilt, so daß während eines Betriebes der Filteranlage das zu reinigende Medium durch die zumindest eine Eintrittsöffnung in die Rücklaufkammer, von dort im wesentlichen durch den Filter in die Vorlaufkammer und danach durch die zumindest eine Austrittsöffnung aus der Filteranlage hinausströmt. Der Filter kann dabei fest in der Filteranlage eingebaut oder austauschbar gestaltet sein.

Die Aufgabe der Erfindung wird durch eine Integration einer chemischen und einer physikalischen Filterwirkung in den Filter gelöst. Hierzu ist der Filter als physikalischer Filter ausgebildet und enthält als Materialbestandteil einen Kältemitteltrockner.

Da bei einigen Anwendungen der Filteranlage ein Kältemittel getrocknet werden muß, das heißt dem Kältemittel Wasser entzogen werden muß, ist durch den Kältemitteltrockner ein Wassergehalt des durch den Filter strömenden Kältemittels verringerbar. Dadurch kann das Kältemittel, insbesondere eine Flüssigkeit, auf besonders einfache Weise gleichzeitig physikalisch gefiltert und getrocknet werden.

Besonders effektiv ist die physikalische und/oder chemische Filterwirkung einer erfindungsgemäßen Filteranlage, wenn die Anlage in einen geschlossenen Kreislauf des Mediums integriert wird, da wegen eines mehrmaligen Durchlaufs durch die Filteranlage eine Filterung des Mediums besonders sicher ist. Bevorzugt wird die Filteranlage in einen Kältemittelkreislauf integriert, wobei der Kältemittelkreislauf für eine Klimaanlage eines Kraftfahrzeuges oder aber für eine beliebige anderweitige Verwendung vorgesehen sein kann.

Unter dem Begriff eines chemischen Filters im Sinne der Erfindung ist ein Element zu verstehen, das aufgrund der chemischen Eigenschaften seiner Materialbestandteile und/oder aufgrund seiner molekularen Struktur, wie bei einem sogenannten Molekularsieb, zumindest einen Stoff aufnehmen oder umsetzen kann, so daß der zumindest eine Stoff einem vorbeiströmenden Medium entziehbar ist. Dabei kann der zumindest eine Stoff dem Medium beigemischt, in dem Medium gelöst oder auf beliebige andere Art und Weise und in einem beliebigen Aggregatzustand, also beispielsweise fest, flüssig, gasförmig oder überkritisch, dem Medium zugesetzt sein. Die Wirkung eines chemischen Filters basiert also im wesentlichen auf dessen mikroskopischer Struktur und/oder dessen chemischen Materialeigenschaften.

Die Integration der chemischen und der physikalischen Filterwirkung in den Filter wird dadurch bewerkstelligt, daß ein physikalischer Filter beispielsweise mit einem chemischen Filtermaterial benetzt, beschichtet oder anderweitig versetzt wird, so daß das durch den Filter strömende Medium mit dem chemischen Filter in Kontakt kommt. Somit wird das Medium sowohl physikalisch als auch chemisch gefiltert. Genauso gut kann sich das chemische Filtermaterial auch in der Masse des physikalischen Filters befinden, beispielsweise durch Zusatz von chemischem Filtermaterial als Additiv zu dem Material des physikalischen Filters vor oder während einer Herstellung des physikalischen Filters, wobei dann Sorge dafür zu tragen ist, daß das Medium ausreichenden Zugang zu dem chemischen Filter findet, zum Beispiel durch Kanäle. Der physikalische Filter dient dann gewissermaßen als Träger für den chemischen Filter.

Eine solche Doppelfunktion des Filters, nämlich physikalische und chemische Reinigung eines Mediums, bringt zum einen eine effektivere Ausnutzung des vorhandenen Bauraums mit sich, zum anderen werden Montage- und Logistikkosten gesenkt, indem anstatt mehrerer Einzelteile, nämlich einem physikalischen Filter, einem chemischen Filter, gegebenenfalls einem Behälter für einen chemischen Filter in Granulatform, nur noch ein Filter in eine Filteranlage eingebaut wird.

Bevorzugte Ausführungsformen der erfindungsgemäßen Filteranlage zum Reinigen eines Mediums sind Gegenstand der Unteransprüche.

Gemäß einer bevorzugten Ausführungsform wird der erfindungsgemäße Filter anstatt durch Auf- oder Einbringen eines chemischen Filtermaterials auf oder in einen physikalischen Filter im wesentlichen ganz oder, falls aus Festigkeitsgründen ein von dem chemischen Filtermaterial verschiedenes Trägermaterial benötigt wird, überwiegend aus einem chemischen Filtermaterial gefertigt. Dies bedeutet einerseits eine Einsparung eines Herstellungsschrittes, nämlich des Auf- beziehungsweise Einbringens des chemischen Filters auf beziehungsweise in den physikalischen Filter, und damit einen reduzierten Fertigungsaufwand, andererseits kommt ein durch den physikalischen Filter strömendes Medium in einen guten Kontakt mit dem chemischen Filter.

Besonders bevorzugt wird der Filter durch ein Sinterverfahren hergestellt. Die makroskopische Struktur für die physikalische Filterwirkung ist dann durch die porige Beschaffenheit des Materials gegeben, so daß dem Filter eine beliebige geometrische Form gegeben werden kann. Besonders vorteilhaft ist ein überwiegend oder im wesentlichen aus einem chemischen Filtermaterial gesinterter Filter.

Gemäß einer bevorzugten Ausgestaltung ist der Filter durch zumindest ein Haltemittel in dem Gehäuse fixiert, beispielsweise durch eine Reib-, Klemm-, Schnapp-, Klebe-, Schweiß- oder beliebige andere Verbindung, wobei beliebig viele Haltemittel möglich sind. Das zumindest eine Haltemittel kann dabei an den Filter angesintert oder angespritzt sein. Genauso gut kann der Filter auch mit dem Haltemittel umspritzt sein. Durch das zumindest eine Haltemittel wird eine Verschiebung und/oder Verkippung des Filters und eine gegebenenfalls damit verbundene Beeinträchtigung dessen Filterwirkung vermieden.

Besonders bevorzugt ist der Filter mit einem Rahmen verbindbar, wobei der Rahmen zumindest ein Haltemittel zur Fixierung des Filters in dem Gehäuse aufweist. Gemäß einer weiteren vorteilhaften Ausgestaltung ist der Filter mit einem Rahmen verbindbar, der zumindest ein Dichtmittel aufweist, mit dem die Vorlaufkammer insbesondere flüssigkeitsdicht von der Rücklaufkammer getrennt wird. Es ist dabei ein Rahmen mit beliebig vielen Halte- und/oder Dichtmitteln denkbar. Die Verbindung des Filters mit dem Rahmen kann eine Reib-, Klemm-, Schnapp-, Klebe-, Schweiß- oder beliebige andere Verbindung sein. Eine solchermaßen vormontierte Filter-Rahmen-Kombination kann sehr einfach in das Gehäuse montiert werden, wodurch der Montageaufwand gering gehalten werden kann.

Die Möglichkeit einer beliebigen Formbarkeit des Filters wird bei einer bevorzugten Ausführungsform ausgenutzt, bei der der Filter geometrisch an das Gehäuse angepaßt ist. Dadurch kann der Betrag der effektiv durchströmbaren Querschnittsfläche des Filters über den Betrag einer tatsächlichen Querschnittsfläche des Gehäuses hinaus vergrößert werden, indem beispielsweise die durchströmbare Filterfläche ein Volumen umschließt, so daß das zu filternde Medium von der Rücklaufkammer durch den Filter in das umschlossene Volumen und anschließend in die Vorlaufkammer oder aber von der Rücklaufkammer in das umschlossene Volumen und anschließend durch den Filter in die Vorlaufkammer strömt. Das umschlossene Volumen kann dabei eine Zylinderform, eine Kegelform, eine Würfel- oder Quaderform, eine Kugel- oder Halbkugelform oder eine beliebige andere Form besitzen. Der Betrag der effektiv durchströmbaren Querschnittsfläche des Filters kann damit an den Betrag der Oberfläche des Gehäuses angenähert oder durch beliebige faltungsähnliche oder andere Deformierung der Filterfläche sogar darüber hinaus vergrößert werden.

Bei einer bevorzugten Ausgestaltungsform ist das Gehäuse als geschlossenes Rohr ausgebildet, wobei der Filter einfach durch eine offene Stirnseite eines Rohres eingesetzt werden kann, wonach das Gehäuse verschlossen wird. Besonders bevorzugt ist der Filter zylinderförmig ausgestaltet, was eine relativ große effektiv durchströmbare Querschnittsfläche bei einer relativ kleinen tatsächlichen Querschnittsfläche bedeutet.

Gemäß einer bevorzugten Weiterbildung ist der Filter als Hohlzylinder mit einer offenen Stirnseite ausgebildet, wobei eine der offenen Stirnseite gegenüberliegende Stirnseite mit einem Deckel verschlossen ist. Durch den Hohlraum in dem Zylinder ist ein umschlossenes Volumen gegeben, das über die offene Stirnseite mit der Rücklaufkammer oder mit der Vorlaufkammer kommuniziert, je nachdem, ob die offene Stirnseite von dem Zylinder aus gesehen auf der Seite der Rücklauf- oder der Vorlaufkammer angeordnet ist. Die durchströmte Filterfläche wird dann durch die Mantelfläche des Zylinders gebildet.

Der den Hohlzylinder verschließende Deckel ist bei einer vorteilhaften Ausbildung mittels eines Spritzgußverfahrens hergestellt, da dies eine einfache Fertigung bedeutet. Gemäß einer weiteren Ausgestaltung kann der Deckel auch mittels eines Sinterverfahrens hergestellt sein. Insbesondere bei einem ebenfalls gesinterten Filter ist der Deckel dann ein Bestandteil des Filters, wird ebenfalls von dem zu reinigenden Medium durchströmt und trägt zu dessen Filterung bei, wodurch der Betrag der effektiv durchströmten Querschnittsfläche des Filters zusätzlich vergrößert wird.

Gemäß einer vorteilhaften Ausführungsform ist der Deckel mit dem Hohlzylinder einstückig ausgebildet, wodurch sich der Fertigungsaufwand weiter verringert, da anstatt zweier Bauteile, nämlich Filter und Deckel, nur noch ein Bauteil montiert werden muß.

Gemäß einer bevorzugten Weiterbildung weist der Deckel zumindest ein Haltemittel zur Fixierung des Filters in dem Gehäuse auf, wobei der Deckel auch mehrere Haltemittel aufweisen kann. Das zumindest eine Haltemittel kann dabei eine Reib-, Klemm-, Schnapp-, Klebe-, Schweiß- oder beliebige andere Verbindung ermöglichen.

Gemäß einer weiteren Ausgestaltung weist der Deckel eine oder mehrere Verdickungen, Wülste, Vorsprünge, Noppen und/oder Nasen auf. Durch eine zusätzliche Ausrichtung des zylinderförmigen Filters an dem verschlossenen Ende ist es möglich, besonders lange Zylinderformen zu verwenden, ohne eine ungewünschte Hin- und Herbewegung eines Endes des Zylinders in Kauf nehmen zu müssen.

Besonders bevorzugt ist das zumindest eine Haltemittel als eine Mehrzahl von Vorsprüngen, Nasen und/oder Noppen ausgebildet, womit ein Hindurchströmen des zu reinigenden Mediums zwischen dem Deckel und einer Wandung des Gehäuses gewährleistet ist.

In einer vorteilhaften Ausführung wird die erfindungsgemäße Filteranlage in einen Wärmetauscher mit Rohren, Rippen und zwei Kopfstücken derart eingesetzt, so daß ein Wärmetauschermedium, das durch den Wärmetauscher strömt, zuvor, anschließend oder währenddessen die Filteranlage durchströmt. Insbesondere ist dabei der Wärmetauscher als Kondensator ausgebildet, wobei der chemische Filter der Filteranlage dann besonders bevorzugt ein Trockner ist. Solche Wärmetauscher sind durch die DE 42 38 853 C2 bekannt geworden, welche hiermit ausdrücklich zum Offenbarungsinhalt gehört.

Gemäß einer weiteren vorteilhaften Ausführung wird die erfindungsgemäße Filteranlage in einen Kältemittelkreislauf einer Klimaanlage mit einem Verdichtungselement, einem ersten Wärmetauscher, einem Entspannungselement und einem zweiten Wärmetauscher eingesetzt, um eine physikalische und eine chemische Filterung des Kältemittels zu ermöglichen. Die chemische Filterung beinhaltet dabei insbesondere eine Trocknung, das heißt einen Wasserentzug, des Kältemittels. Insbesondere ist dabei das Verdichtungselement ein Kompressor, der erste Wärmetauscher ein Kondensator, das Entspannungselement ein Expansionsventil und der zweite Wärmetauscher ein Verdampfer.

Es besteht überdies die Möglichkeit, die erfindungsgemäße Filteranlage zum Reinigen eines Mediums in einem beliebigen geschlossenen oder offenen Kreislauf allein oder in Verbindung mit zumindest einer weiteren Filteranlage zu verwenden, wobei die zumindest eine weitere Filteranlage ebenfalls eine erfindungsgemäße Filteranlage oder eine Filteranlage nach dem Stand der Technik sein kann.

Die Erfindung wird nachfolgend anhand von Ausführungsbeispielen unter Bezugnahme auf die Zeichnungen näher erläutert. Es zeigen:
- Fig. 1: einen Wärmetauscher mit einer erfindungsgemäßen Filteranlage,
- Fig. 2: eine Filteranlage als Teil eines Wärmetauschers und
- Fig. 3: einen Filter einer Filteranlage.

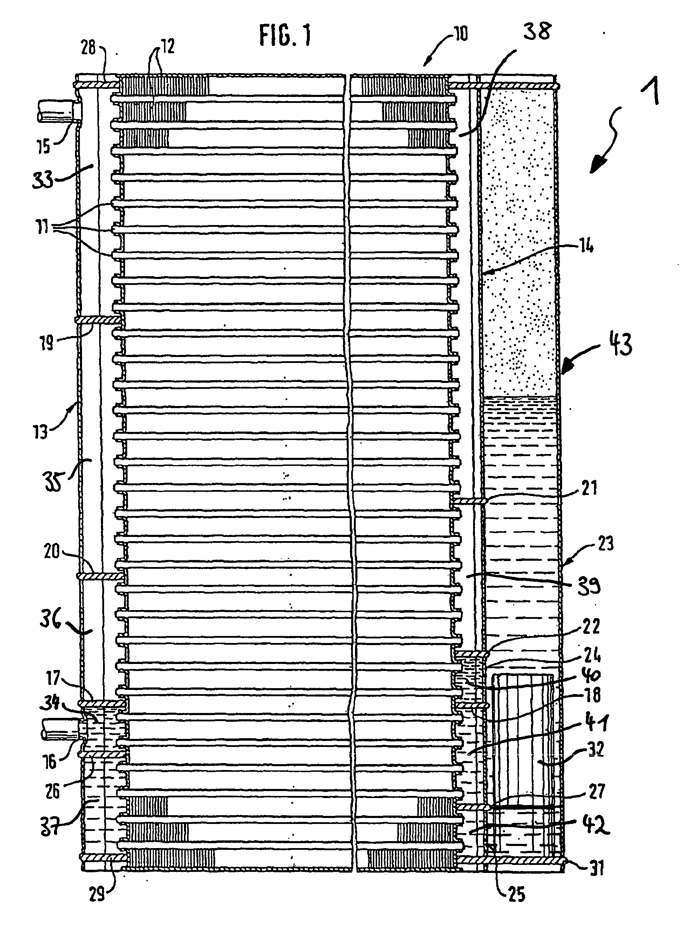

In Figur 1 ist ein Kondensator (1) eines ansonsten nicht gezeigten Kältemittelkreislaufs für eine Klimaanlage dargestellt. Er besitzt einen Rohr-Rippen-Block (10) mit Rohren (11) und dazwischen angeordneten Rippen (12). Die Rohre (11), die bei diesem Ausführungsbeispiel als Flachrohre ausgebildet sind, münden in Sammelrohren (13, 14), die sich beidseits über die gesamte Höhe des Rohr-Rippen-Blocks (10) erstrecken. Ein erstes Sammelrohr (13) ist mit einem Zulaufanschluß (15) für von einem nicht dargestellten Verdichtungselement, wie zum Beispiel einem Kompressor, kommendes gasförmiges Kältemittel und mit einem Ablaufanschluß (16) für zu einem ebenfalls nicht dargestellten Entspannungselement, wie zum Beispiel einem Expansionsventil, fließendes flüssiges Kältemittel versehen.

Die beiden Sammelrohre (13, 14) sind durch Trennwände (17, 18, 19, 20, 21, 22, 26, 27) in mit den Anschlüssen (15, 16) kommunizierende Kopfstücke (33, 34) und in Zwischenstücke (35, 36, 37, 38, 39, 40, 41, 42) derart unterteilt, daß das Kältemittel vom Kopfstück (33) zum Zwischenstück (40) und vom Zwischenstück (42) zum Kopfstück (34) jeweils einen serpentinenartigen Weg durch den Kondensator (1) beschreibt, wobei der Strömungsquerschnitt mit zunehmender Abkühlung entsprechend dem sich dabei verringernden Volumen des gasförmigen und/oder flüssigen Kältemittels ebenfalls verringert wird. Die Sammelrohre (13, 14) sind durch Abschlußwände (28, 29, 30, 31) fluiddicht verschlossen.

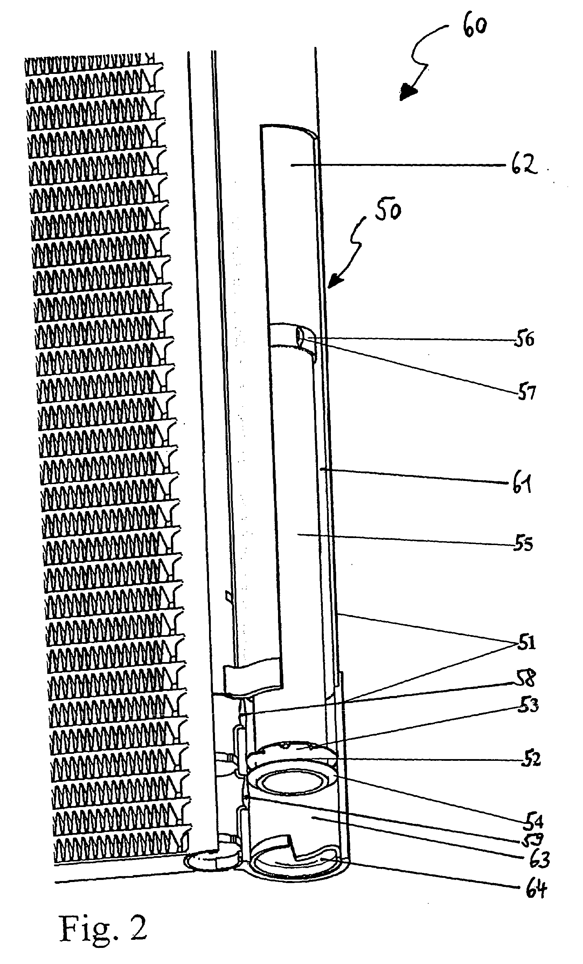

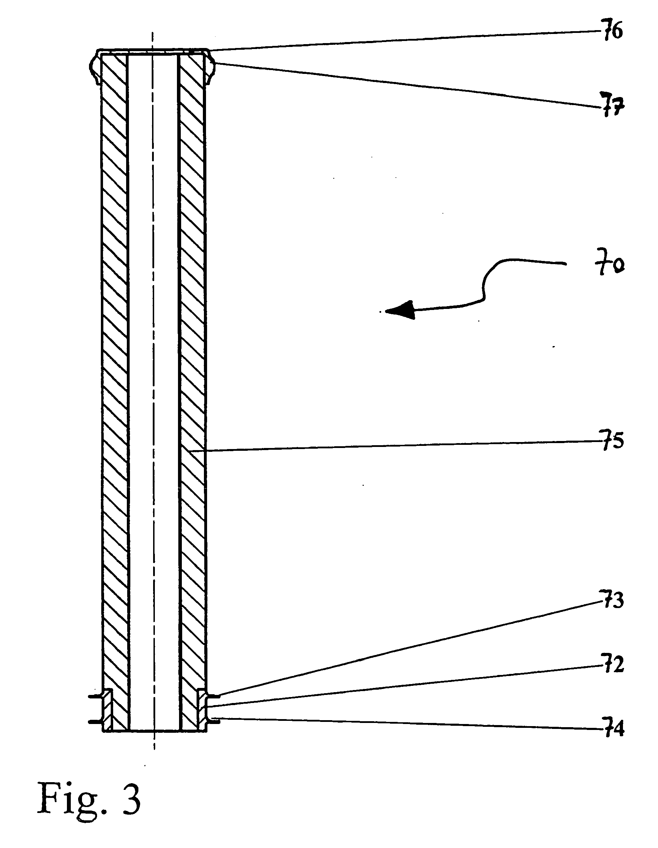

An das Sammelrohr (14) ist eine Filteranlage (43) angeschlossen, die zweckmäßigerweise auch als Sammler für das kondensierte Kältemittel dient. Das Gehäuse (23) der Filteranlage (43) weist eine Eintrittsöffnung (24) und eine Austrittsöffnung (25) auf, die mit den Zwischenstücken (40) beziehungsweise (42) des Sammelrohrs (14) kommunizieren. Innerhalb des Gehäuses (23) befindet sich ein Filter (32), dessen Funktionsweise anhand der Fig. 2 und 3 näher beschrieben wird.

Fig. 2 zeigt eine detailliertere Ansicht eines Ausführungsbeispiels einer erfindungsgemäßen Filteranlage (50), die wie bei dem in Fig. 1 beschriebenen Beispiel Teil eines Wärmetauschers (60) ist. Die Filteranlage (50) besteht aus einem Gehäuse (51) mit einer Eintrittsöffnung (58) und einer Austrittsöffnung (59) und aus einem Filter (55), der eine Kammer (61) innerhalb des Gehäuses (51) in eine Rücklaufkammer (62), die mit der Eintrittsöffnung (58) kommuniziert, und in eine Vorlaufkammer (63), die mit der Austrittsöffnung (59) kommuniziert, trennt.

Der Filter (55) besteht aus einem Trocknermaterial wie einem Molekularsieb als chemischem Filtermaterial, das mittels eines Sinterverfahrens zu einem festen Bauteil in Form eines Hohlzylinders gefertigt ist. Bei diesem Beispiel einer Filteranlage für einen Kältemittelkreislauf entzieht das chemische Filtermaterial dem vorbeiströmenden Kältemittel gegebenenfalls enthaltenes Wasser. Durch das Sinterverfahren weist der Filter (55) Poren auf, die durchlässig für ein durch die Filteranlage (50) strömendes Kältemittel sind, nicht jedoch für Verschmutzungen, beispielsweise in Form von (Metall-) Staubpartikeln, so daß eine physikalische Filterwirkung gewährleistet ist.

Der Filter (55) ist in einem Rahmen (52) aufgenommen, wobei der Rahmen (52) eine umlaufende, unterbrochene Rippe (53) als Haltemittel zur Fixierung des Filters (55) in dem Gehäuse (51) der Filteranlage (50) aufweist. Darüberhinaus ist an dem Rahmen (52) eine Dichtlippe (54) für eine vollständige Trennung der Vorlaufkammer (63) von der Rücklaufkammer (62) angebracht, so daß die Kammern (62, 63) allein durch den Filter (55) hindurch miteinander kommunizieren. Dadurch wird eine weitgehend vollständige physikalische Filterung gewährleistet.

Eine Stirnseite des hohlzylinderförmigen Filters (55) ist mit einem Deckel (56) verschlossen, wobei der Deckel mittels eines Spritzgußverfahrens gefertigt ist. Für eine verbesserte Fixierung des Filters (55) in dem Gehäuse (51) sind auf dem Deckel (56) umfangseitig Noppen (57) als Haltemittel angebracht.

Bei dem hier beschriebenen Ausführungsbeispiel ist der Filter (55) nicht aus dem Gehäuse (51) der Filteranlage (50) herausnehmbar, da das rohrförmige Gehäuse (51) mit einer Abschlußplatte (64) fest verschlossen ist. Bei einer abgewandelten, nicht dargestellten Ausführungsform ist anstelle der Abschlußplatte (64) ein Verschlußstopfen vorgesehen, so daß der Filter (55) austauschbar ist, beispielsweise zwecks einer Wartung.

In Fig. 3 ist ein Filter (75) einer ansonsten nicht näher gezeigten Filteranlage (70) in einer Querschnittsansicht dargestellt. Der Filter (75) ist in einen im wesentlichen ringförmigen Rahmen (72) eingebettet, der zwei Dichtlippen (73, 74) aufweist. Die Dichtlippen (73, 74) dienen gleichzeitig als Dichtmittel zur Abdichtung einer Rücklaufkammer gegen eine Vorlaufkammer und als Haltemittel zur Fixierung des Filters (75) in einem nicht dargestellten Gehäuse der Filteranlage (70).

Ein Deckel (76) verschließt eine Stirnseite des hohlzylinderförmigen Filters (75) und weist für eine zusätzliche Fixierung des Filters (75) in der Filteranlage (70) umfangseitig Noppen (77) auf. Der Deckel (76) ist wie der Filter (75) aus einem chemischen Filtermaterial gesintert und ist damit Teil des Filters (75).

## Patentansprüche

1. Wärmetauscher für einen Kältemittelkreislauf einer Klimaanlage, mit Rohren, Rippen, zwei Kopfstücken und einer Filteranlage für das Kältemittel, wobei die Filteranlage ein als geschlossenes Rohr ausgebildetes Gehäuse mit zumindest einer Eintritts- und zumindest einer Austrittsöffnung für das Kältemittel und mit einer Kammer sowie einen physikalischen Filter und einen Kältemitteltrockner aufweist, wobei der physikalische Filter die Kammer in eine mit der zumindest einen Eintrittsöffnung kommunizierende Rücklaufkammer und eine mit der zumindest einen Austrittsöffnung kommunizierende Vorlaufkammer teilt, **dadurch gekennzeichnet, daß** der Kältemitteltrockner als Materialbestandteil in dem physikalischen Filter enthalten ist.

2. Wärmetauscher nach Anspruch 1, **dadurch gekennzeichnet, daß** zur Bildung des Filters ein Kältemitteltrocknermaterial in einen physikalischen Filter integriert ist.

3. Wärmetauscher nach Anspruch 1, **dadurch gekennzeichnet, daß** der Filter überwiegend oder im wesentlichen ganz aus einem Kältemitteltrocknermaterial besteht.

4. Wärmetauscher nach einem der Ansprüche 1 bis 3, **dadurch gekennzeichnet, daß** der Filter mittels eines Sinterverfahrens hergestellt ist.

5. Wärmetauscher nach einem der Ansprüche 1 bis 4, **dadurch gekennzeichnet, daß** der Filter durch zumindest ein Haltemittel in dem Gehäuse fixiert ist.

6. Wärmetauscher nach einem der Ansprüche 1 bis 5, **dadurch gekennzeichnet, daß** der Filter mit einem Rahmen verbindbar ist, der zumindest ein Haltemittel zur Fixierung in dem Gehäuse aufweist.

7. Wärmetauscher nach einem der Ansprüche 1 bis 6, **dadurch gekennzeichnet, daß** der Filter mit einem Rahmen verbindbar ist, der zumindest ein Dichtmittel zur Trennung der Vorlaufkammer von der Rücklaufkammer aufweist.

8. Wärmetauscher nach einem der Ansprüche 1 bis 7, **dadurch gekennzeichnet, daß** der Filter geometrisch an das Gehäuse angepaßt ist.

9. Wärmetauscher nach einem der Ansprüche 1 bis 8, **dadurch gekennzeichnet, daß** der Filter zylinderförmig ausgebildet ist.

10. Wärmetauscher nach Anspruch 9, **dadurch gekennzeichnet, daß** der Filter als Hohlzylinder mit einer offenen Stirnseite und einer mit einem Deckel verschlossenen Stirnseite ausgebildet ist.

11. Wärmetauscher nach Anspruch 10, **dadurch gekennzeichnet, daß** der Deckel mittels eines Spritzgußverfahrens hergestellt ist.

12. Wärmetauscher nach Anspruch 10, **dadurch gekennzeichnet, daß** der Deckel mittels eines Sinterverfahrens hergestellt ist.

13. Wärmetauscher nach einem der Ansprüche 10 bis 12, **dadurch gekennzeichnet, daß** der Hohlzylinder mit dem Deckel einstückig ausgebildet ist.

14. Wärmetauscher nach einem der Ansprüche 10 bis 13, **dadurch gekennzeichnet, daß** der Deckel zumindest ein Haltemittel zur Fixierung des Filters in dem Gehäuse aufweist.

15. Wärmetauscher nach einem der Ansprüche 10 bis 13, **dadurch gekennzeichnet, daß** der Deckel zumindest eine Verdickung, einen Wulst, einen Vorsprung, eine Noppe und/oder eine Nase für eine Ausrichtung des Filters in dem Gehäuse aufweist.

16. Kältemittelkreislauf einer Klimaanlage, insbesondere für ein Kraftfahrzeug, mit einem Verdichtungselement, mit einem ersten Wärmetauscher, mit einem Entspannungselement, mit einem zweiten Wärmetauscher und mit einer Filteranlage für das Kältemittel, wobei die Filteranlage ein als geschlossenes Rohr ausgebildetes Gehäuse mit zumindest einer Eintritts- und zumindest einer Austrittsöffnung für das Kältemittel und mit einer Kammer sowie einen physikalischen Filter und einen Kältemitteltrockner aufweist, wobei der physikalische Filter die Kammer in eine mit der zumindest einen Eintrittsöffnung kommunizierende Rücklaufkammer und eine mit der zumindest einen Austrittsöffnung kommunizierende Vorlaufkammer teilt, **dadurch gekennzeichnet, daß** der Kältemitteltrockner als Materialbestandteil in dem physikalischen Filter enthalten ist.

17. Kältemittelkreislauf nach Anspruch 16, **dadurch gekennzeichnet, daß** zur Bildung des Filters ein Kättemitteltrocknermaterial in einen physikalischen Filter integriert ist.

18. Kältemittelkreislauf nach Anspruch 16, **dadurch gekennzeichnet, daß** der Filter überwiegend oder im wesentlichen ganz aus einem Kältemitteltrocknermaterial besteht.

19. Kältemittelkreislauf nach einem der Ansprüche 16 bis 18, **dadurch gekennzeichnet, daß** der Filter mittels eines Sinterverfahrens hergestellt ist.

20. Kältemittelkreislauf nach einem der Ansprüche 16 bis 19, **dadurch gekennzeichnet, daß** der Filter durch zumindest ein Haltemittel in dem Gehäuse fixiert ist.

21. Kältemittelkreislauf nach einem der Ansprüche 16 bis 20, **dadurch gekennzeichnet, daß** der Filter mit einem Rahmen verbindbar ist, der zumindest ein Haltemittel zur Fixierung in dem Gehäuse aufweist.

22. Kältemittelkreislauf nach einem der Ansprüche 16 bis 21, **dadurch gekennzeichnet, daß** der Filter mit einem Rahmen verbindbar ist, der zumindest ein Dichtmittel zur Trennung der Vorlaufkammer von der Rücklaufkammer aufweist.

23. Kältemittelkreislauf nach einem der Ansprüche 16 bis 22, **dadurch gekennzeichnet, daß** der Filter geometrisch an das Gehäuse angepaßt ist.

24. Kältemittelkreislauf nach einem der Ansprüche 16 bis 23, **dadurch gekennzeichnet, daß** der Filter zylinderförmig ausgebildet ist.

25. Kältemittelkreislauf nach Anspruch 24, **dadurch gekennzeichnet, daß** der Filter als Hohlzylinder mit einer offenen Stirnseite und einer mit einem Deckel verschlossenen Stirnseite ausgebildet ist.

26. Kältemittelkreislauf nach Anspruch 25, **dadurch gekennzeichnet, daß** der Deckel mittels eines Spritzgußverfahrens hergestellt ist.

27. Kältemittelkreislauf nach Anspruch 25, **dadurch gekennzeichnet, daß** der Deckel mittels eines Sinterverfahrens hergestellt ist.

28. Kältemittelkreislauf nach einem der Ansprüche 25 bis 27, **dadurch gekennzeichnet, daß** der Hohlzylinder mit dem Deckel einstückig ausgebildet ist.

29. Kältemittelkreislauf nach einem der Ansprüche 25 bis 28, **dadurch gekennzeichnet, daß** der Deckel zumindest ein Haltemittel zur Fixierung des Filters in dem Gehäuse aufweist.

30. Kältemittelkreislauf nach einem der Ansprüche 25 bis 28, **dadurch gekennzeichnet, daß** der Deckel zumindest eine Verdickung, einen Wulst, einen Vorsprung, eine Noppe und/oder eine Nase für eine Ausrichtung des Filters in dem Gehäuse aufweist.

## Claims

1. A heat exchanger for a refrigerant cycle system of an air conditioning system having tubes, fins, two head pieces and a filter system for the refrigerant, the filter system having a housing designed as a sealed tube with at least one inlet opening and at least one outlet opening for the refrigerant and having a chamber, a physical filter and a refrigerant dryer, the physical filter dividing the chamber into a return chamber which communicates with the at least one inlet opening and a flow chamber which communicates with the at least one outlet opening,
**characterised in that**
the refrigerant dryer is contained in the physical filter as the material element.

2. A heat exchanger in accordance with claim 1,
**characterised in that**
in order to form the filter a refrigerant dryer material is integrated in a physical filter.

3. A heat exchanger in accordance with claim 1,
**characterised in that**
the filter consists predominantly or essentially of a refrigerant dryer material.

4. A heat exchanger in accordance with one of claims 1 to 3,
**characterised in that**
the filter is manufactured by means of a sintering process.

5. A heat exchanger in accordance with one of claims 1 to 4,
**characterised in that**
the filter is fixed in the housing by at least one retaining means.

6. A heat exchanger in accordance with one of claims 1 to 5,
**characterised in that**
the filter can be connected to a frame which has at least one retaining means for fixing it in the housing.

7. A heat exchanger in accordance with one of claims 1 to 6,
**characterised in that**
the filter can be connected to a frame which has at least one sealing means for separating the flow chamber from the return chamber.

8. A heat exchanger in accordance with one of claims 1 to 7,
**characterised in that**
the filter is geometrically adapted to the housing.

9. A heat exchanger in accordance with one of claims 1 to 8,
**characterised in that**
the filter is cylindrical in design.

10. A heat exchanger in accordance with claim 9,
**characterised in that**
the filter is designed as a hollow cylindrical body with one open front face and one front face which is closed by a cover.

11. A heat exchanger in accordance with claim 10,
**characterised in that**
the cover is manufactured by means of an injection moulding process.

12. A heat exchanger in accordance with claim 10,
**characterised in that**
the cover is manufactured by means of a sintering process.

13. A heat exchanger in accordance with one of claims 10 to 12,
**characterised in that**
the hollow cylindrical body is formed as one part with the cover.

14. A heat exchanger in accordance with one of claims 10 to 13,
**characterised in that**
the cover has at least one retaining means for fixing the filter in the housing.

15. A heat exchanger in accordance with one of claims 10 to 13,
**characterised in that**
the cover has at least one enlarged area, boss, projection, knob and/or nose for orienting the filter in the housing.

16. A refrigerant cycle system of an air conditioning system, in particular for a motor vehicle, having a sealing element, a first heat exchanger, a relief element, a second heat exchanger and a filter system for the refrigerant, the filter system having a housing designed as a sealed tube with at least one inlet opening and at least one outlet opening for the refrigerant and having a chamber, a physical filter and a refrigerant dryer, the physical filter dividing the chamber into a return chamber which communicates with the at least one inlet opening and a flow chamber which communicates with the at least one outlet opening,
**characterised in that**
the refrigerant dryer is contained in the physical filter as the material element.

17. A refrigerant cycle system in accordance with claim 16,
**characterised in that**
in order to form the filter a refrigerant dryer material is integrated in a physical filter.

18. A refrigerant cycle system in accordance with claim 16,
**characterised in that**
the filter consists predominantly or essentially of a refrigerant dryer material.

19. A refrigerant cycle system in accordance with one of claims 16 to 18,
**characterised in that**
the filter is manufactured by means of a sintering process.

20. A refrigerant cycle system in accordance with one of claims 16 to 19,
**characterised in that**
the filter is fixed in the housing by at least one retaining means.

21. A refrigerant cycle system in accordance with one of claims 16 to 20,
**characterised in that**
the filter can be connected to a frame which has at least one retaining means for fixing it in the housing.

22. A refrigerant cycle system in accordance with one of claims 16 to 21,
**characterised in that**
the filter can be connected to a frame which has at least one sealing means for separating the flow chamber from the return chamber.

23. A refrigerant cycle system in accordance with one of claims 16 to 22,
**characterised in that**
the filter is geometrically adapted to the housing.

24. A refrigerant cycle system in accordance with one of claims 16 to 23,
**characterised in that**
the filter is cylindrical in design.

25. A refrigerant cycle system in accordance with claim 24,
**characterised in that**
the filter is designed as a hollow cylindrical body with one open front face and one front face which is closed by a cover.

26. A refrigerant cycle system in accordance with claim 25,
**characterised in that**
the cover is manufactured by means of an injection moulding process.

27. A refrigerant cycle system in accordance with claim 25,
**characterised in that**
the cover is manufactured by means of a sintering process.

28. A refrigerant cycle system in accordance with one of claims 25 to 27,
**characterised in that**
the hollow cylindrical body is formed as one part with the cover.

29. A refrigerant cycle system in accordance with one of claims 25 to 28,
**characterised in that**
the cover has at least one retaining means for fixing the filter in the housing.

30. A refrigerant cycle system in accordance with one of claims 25 to 28,
**characterised in that**
the cover has at least one enlarged area, boss, projection, knob and/or nose for orienting the filter in the housing.

## Revendications

1. Échangeur de chaleur pour un cycle de frigorigène d'une climatisation, avec des conduites, des ailettes, deux pièces de tête et une installation de filtrage pour le frigorigène, ladite installation de filtrage comportant un corps constitué par un tube fermé avec au moins une ouverture d'entrée et au moins une ouverture de sortie pour le frigorigène et avec une chambre, par ailleurs un filtre physique et un dessicateur réfrigérant, ledit filtre physique séparant la chambre en une chambre de reflux communiquant au moins avec l'ouverture d'entrée et une chambre de flux communiquant au moins avec l'ouverture de sortie, **caractérisé en ce que** le dessicateur réfrigérant, en tant que composant matière, est compris dans le filtre physique.

2. Échangeur de chaleur selon la revendication 1, **caractérisé en ce qu'**un matériau dessicateur réfrigérant est intégré dans un filtre physique, dans le but de former le filtre.

3. Échangeur de chaleur selon la revendication 1, **caractérisé en ce que** le filtre est constitué largement ou sensiblement de façon totale d'un matériau dessicateur réfrigérant.

4. Échangeur de chaleur selon l'une quelconque des revendications 1 à 3, **caractérisé en ce que** le filtre est fabriqué au moyen d'un procédé d'agglomération.

5. Échangeur de chaleur selon l'une quelconque des revendications 1 à 4, **caractérisé en ce que** le filtre est fixé par au moins un moyen de fixation dans le corps.

6. Échangeur de chaleur selon l'une quelconque des revendications 1 à 5, **caractérisé en ce que** le filtre peut être raccordé à un cadre comportant au moins un moyen de fixation pour permettre la fixation dans le corps.

7. Échangeur de chaleur selon l'une quelconque des revendications 1 à 6, **caractérisé en ce que** le filtre peut être raccordé à un cadre comportant au moins un moyen d'étanchéité destiné à séparer la chambre de flux de la chambre de reflux.

8. Échangeur de chaleur selon l'une quelconque des revendications 1 à 7, **caractérisé en ce que** le filtre est adapté géométriquement au corps.

9. Échangeur de chaleur selon l'une quelconque des revendications 1 à 8, **caractérisé en ce que** le filtre a la forme d'un cylindre.

10. Échangeur de chaleur selon la revendication 9, **caractérisé en ce que** le filtre est constitué par un cylindre creux avec une face frontale ouverte et une face frontale fermée à l'aide d'un couvercle.

11. Échangeur de chaleur selon la revendication 10,
**caractérisé en ce que** le couvercle est fabriqué au moyen d'un procédé de moulage par injection.

12. Échangeur de chaleur selon la revendication 10,
**caractérisé en ce que** le couvercle est fabriqué au moyen d'un procédé d'agglomération.

13. Échangeur de chaleur selon l'une quelconque des revendications 10 à 12, **caractérisé en ce que** le cylindre creux avec le couvercle est constitué d'un seul tenant.

14. Échangeur de chaleur selon l'une quelconque des revendications 10 à 13, **caractérisé en ce que** le couvercle comporte au moins un moyen de fixation pour permettre la fixation du filtre dans le corps.

15. Échangeur de chaleur selon l'une quelconque des revendications 10 à 13, **caractérisé en ce que** le couvercle comporte au moins un épaississement, un boudin, un épaulement, une nope et/ou un tenon pour permettre un alignement du filtre dans le corps.

16. Cycle de frigorigène d'une climatisation, notamment pour un véhicule, avec un élément de compression, un premier échangeur de chaleur, un élément de détente, un deuxième échangeur de chaleur et une installation de filtrage pour le frigorigène, ladite installation de filtrage comportant un corps constitué par un tube fermé avec au moins une ouverture d'entrée et au moins une ouverture de sortie pour le frigorigène et avec une chambre, par ailleurs un filtre physique et un dessicateur réfrigérant, ledit filtre physique séparant la chambre en une chambre de reflux communiquant au moins avec l'ouverture d'entrée et une chambre de flux communiquant au moins avec l'ouverture de sortie, **caractérisé en ce que** le dessicateur réfrigérant, en tant que composant matière, est compris dans le filtre physique.

17. Cycle de frigorigène selon la revendication 16, **caractérisé en ce qu'**un matériau dessicateur réfrigérant est intégré dans un filtre physique en vue de former le filtre.

18. Cycle de frigorigène selon la revendication 16, **caractérisé en ce que** le filtre est constitué largement ou sensiblement de façon totale d'un matériau dessicateur réfrigérant.

19. Cycle de frigorigène selon l'une quelconque des revendications 16 à 18, **caractérisé en ce que** le filtre est fabriqué au moyen d'un procédé d'agglomération.

20. Cycle de frigorigène selon l'une quelconque des revendications 16 à 19, **caractérisé en ce que** le filtre est fixé par au moins un moyen de fixation dans le corps.

21. Cycle de frigorigène selon l'une quelconque des revendications 16 à 20, **caractérisé en ce que** le filtre peut être raccordé à un cadre comportant au moins un moyen de fixation pour permettre la fixation dans le corps.

22. Cycle de frigorigène selon l'une quelconque des revendications 16 à 21, **caractérisé en ce que** le filtre peut être raccordé à un cadre comportant au moins un moyen d'étanchéité destiné à séparer la chambre de flux de la chambre de reflux.

23. Cycle de frigorigène selon l'une quelconque des revendications 16 à 22, **caractérisé en ce que** le filtre est adapté géométriquement au corps.

24. Cycle de frigorigène selon l'une quelconque des revendications 16 à 23, **caractérisé en ce que** le filtre a la forme d'un cylindre.

25. Cycle de frigorigène selon la revendication 24, **caractérisé en ce que** le filtre est constitué par un cylindre creux avec une face frontale ouverte et une face frontale fermée à l'aide d'un couvercle.

26. Cycle de frigorigène selon la revendication 25, **caractérisé en ce que** le couvercle est fabriqué au moyen d'un procédé de moulage par injection.

27. Cycle de frigorigène selon la revendication 25, **caractérisé en ce que** le couvercle est fabriqué au moyen d'un procédé d'agglomération.

28. Cycle de frigorigène selon l'une quelconque des revendications 25 à 27, **caractérisé en ce que** le cylindre creux avec le couvercle est constitué d'un seul tenant.

29. Cycle de frigorigène selon l'une quelconque des revendications 25 à 28, **caractérisé en ce que** le couvercle comporte au moins un moyen de fixation pour permettre la fixation du filtre dans le corps.

30. Cycle de frigorigène selon l'une quelconque des revendications 25 à 28, **caractérisé en ce que** le couvercle comporte au moins un épaississement, un boudin, un épaulement, une nope et/ou un tenon pour permettre un alignement du filtre dans le corps.
